# EUROPEAN PATENT SPECIFICATION

(11) **EP 2 671 934 B1**
(45) Date of publication and mention of the grant of the patent: **11.03.2015**
(21) Application number: 13171146.7
(22) Date of filing: 07.06.2013
(51) Int. Cl.: C09K 3/22, A01N 25/02, A01N 25/04

(54) **A method of treating an outdoors area with an aqueous solution to promote plant growth**
Verfahren zur Behandlung einer Fläche im Freien mit einer wässrigen Lösung zur Förderung des Pflanzenwachstums
Procédé de traitement d'une zone extérieure avec une solution aqueuse pour favoriser la croissance des plantes

(30) Priority: 07.06.2012 NL 2008953
(43) Date of publication of application: 11.12.2013
(73) Proprietor: Instral Holding B.V., 1335 NC Almere (NL)
(72) Inventor: Janbroers, Nils, 1335 NC Almere (NL); Korver, Jacobus Gerardus, 1546 LD Jisp (NL)
(74) Representative: Altenburg, Bernardus Stephanus Franciscus

(56) References cited:
- WO-A1-94/26404
- AT-B- 379 798
- US-A- 3 890 158
- US-A- 4 793 850
- US-A- 4 932 994

## Description

The present invention relates to a method of treating an outdoors area, wherein the outdoors area is sprayed with an aqueous solution to promote plant growth.

To promote plant growth, it is known to apply water to the ground.

A problem is that the water evaporates rapidly, in particular during summer.

The object of the present invention is to further improve plantgrowth.

To this end, a method according to the preamble is characterized in that the outdoors area is sprayed with a colloidal solution, said colloidal solution comprising
- a discontinuous first phase comprising paraffin
   - having a carbon chain length between 18 and 40 carbon atoms;
   - a solidification point between 15 and 70°C; and
   - of which at least 6% by weight is linear; and
- a continuous second phase comprising water;
   the colloidal solution being applied in an amount of at least 1.25 g of paraffin per m².

It has been found that the rate of evaporation of water is decreased, keeping the surface moist longer. This promotes plant growth. The colloidal solution is cost-effective, has little or no adverse environmental effect, and was found to be effective for a longer timespan than plain water. The term paraffin indicates a single alkane or a mixture of alkanes. In general, the amount of linear paraffin that will be applied will be at most 40 g/m². A typical amount of colloidal solution applied per square meter is for example at least 10 ml, such as 50-200 ml, but if it is desired to provide soil with water more colloidal solution can be applied with, in general, a lower concentration of the discontinuous first phase.

US4932994 (1990) discloses a method for reducing evaporation of water from spray mixtures of agricultural chemicals. This helps to ensure that droplets reach the crop. The spray mixture comprises an aqueous solution comprising an agricultural chemical and an evaporation inhibitor. The evaporation inhibitor is a colloidal solution comprising paraffin. Paraffin is applied onto agricultural crops with at most 0.3 g per m².

According to a favourable embodiment, the outdoors area is an agricultural field.

The method according to the invention can be used to retain water very advantageously. It allows for increased yield of crops and/or earlier harvest.

According to a favourable embodiment, the agricultural field is sprayed with said colloidal solution on the day that the field is sown.

This helps to provide the seed with water facilitating germination. Because it has been found that the colloidal solution helps to retain water, water is available for a longer period of time and it has been found that the plants grow more quickly. It also may allow for a reduced amount of, usually costly, seeds to be used.

According to a favourable embodiment, sowing and spraying is performed simultaneously.

This is very efficient, in particular if performed using the same vehicle, such as a tractor.

According to a favourable embodiment, the agricultural field is sprayed with said colloidal solution within 30 days after at least one operation chosen from ploughing and harrowing.

This is preferably done within 2 weeks, more preferably within 1 week, and most preferably simultaneously.

According to a favourable embodiment, the outdoors area is chosen from a golf course, a soccer field, a hockey field and a football field.

They remain wet for a longer period of time. This may translate into savings in cost for water. When such an outdoors area is started, a savings in the amount of seeds may be achieved, or a reduction in time before the outdoors area can be played on.

According to a favourable embodiment, the outdoors area is chosen from lawns and parks.

With the invention, they remain wet for a longer period of time. This may also translate into savings in cost for water.

According to a favourable embodiment, the paraffin is applied in an amount of 1.25 to 25 g/m², preferably between 2.5 and 10g/m².

It has been found that the use of such amounts is favourable.

According to a favourable embodiment, at least 10 wt% of the paraffin is linear paraffin.

This provides for improved retention of water.

According to a favourable embodiment, the second phase comprises a saccharid dissolved and/or dispersed in water, the saccharid being chosen from the group consisting of mono-saccharids, oligo-saccarids and polysaccharids, and the saccharid is applied in an amount of at least 0.1 g/m².

An example of a suitable saccharid that may be dispersed in water is cellulose.

According to a favourable embodiment, the amount of saccharid applied per m² is between 2 and 100 g/m².

This results in improved growth of plants on sprayed areas.

According to a favourable embodiment, the method comprises diluting a concentrated colloidal suspension using water, and spraying the diluted colloidal solution.

Water will be locally available in sufficient quantities, so it will not be necessary to transport large volumes of (diluted) colloidal solution over large distances. This obviates the need to bring dispersion apparatus (for emulsifying) to the place where the colloidal solution is sprayed.

The invention will now be illustrated with reference to the example section below, and with reference to the drawing wherein

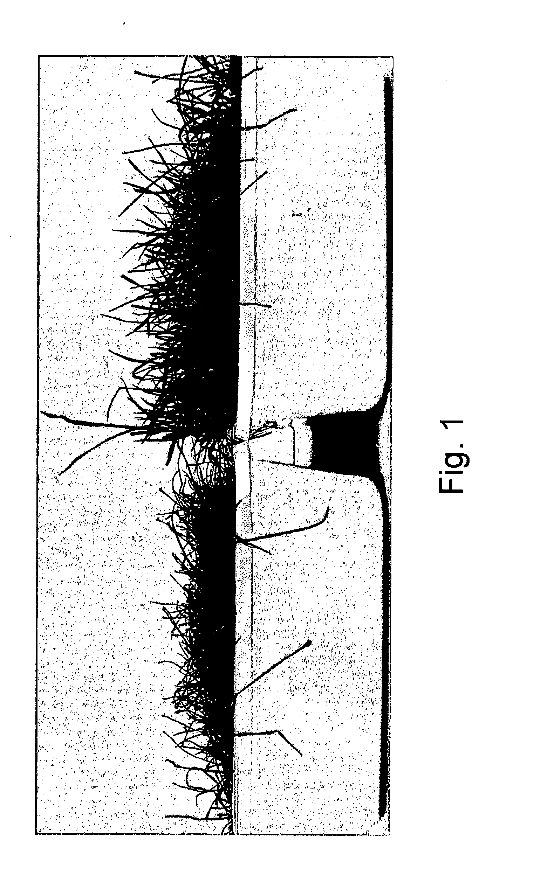

Fig. 1 Trays with grass turf after 6 days. Left: treated with plain water, right: treated with paraffin emulsion.

### I. PLANT GROWTH

I.1 Soil was seeded with onion seeds. Before plant growth was visible, a first patch was treated with 20 ml/m² of a colloidal solution of Vivashield 9662 (H&R Benelux, Nuth, the Netherlands) which, after 10x dilution with water by the manufacturer, is a 6% emulsion of a wax in water, the wax being 70% isoparaffins and 30% n-paraffins (solidification point 62°C). A second patch was treated with 40 ml/m² of this emulsion. A control patch was sprayed with plain water.

1.2 Soil was seeded with seeds of sugar beets. Wit the first appearance of plant growth, a first patch was treated with 20 ml of the same colloidal solution as specified in I.1. A second patch was treated with 40 ml/m² of this emulsion. A control patch was sprayed with plain water.

Results: Both for Exp. I.1 and 1.2, the patches were assessed visually. The first and second patches sprayed with the colloidal solution in accordance with the invention showed unmistakably better growth than the control patches.

### III. EFFECT OF PARAFFIN EMULSIONS ON PLANT GROWTH

The effect of plant growth was tested on grass, which is also an appropriate model for agriculturally important plants like wheat.

### Experiment III.1:

Plastic trays (1 x w x h = 17 x 12.5 x 4.5 cm) were evenly filled with wet sandbox sand (300 g). Rolls and squares of grass turf were cut to fit exactly into the trays and were placed upon the sand. In every corner and in the middle of the turf, 2 ml of water was added. Three samples of turf were then coated with 22 grams of water (1 liter/m²) and three with 22 grams of a paraffin emulsion (0.5% paraffin). All trays with turf were placed in the fume cupboard and inspected every 24 hours. After 6 days, the grass in the trays treated with ordinary water was dried up and looked similar to hay, whereas the grass in the trays treated with the paraffin emulsion looked green and vital (Fig. 1).

### Experiment III.2:

Plastic trays (1 x w x h = 17 x 12.5 x 4.5 cm) were evenly filled with wet sandbox sand (300 g). In six trays was also 425 mg (2 mg/cm²) of grass seeds evenly distributed over the sand. Three of these trays with sand and grass seeds were coated with 22 gram of water (trays 1, 2, 3) and three trays with sand and grass seeds were coated with 22 gram paraffin emulsion (0.5% paraffin, trays 3, 5, 6). Three trays filled only with sand were coated with 22 gram paraffin emulsion (0.5% paraffin) in which 425 mg of grass seeds had been allowed to soak for two hours (trays 7, 8, 9). All 9 trays were placed in the fume cupboard and in every corner and in the middle of the turf, daily 2 ml of water was carefully dropped. After 14 days, the trays 1 to 3 were barren, whereas the trays 4 to 6 has grass leaves having a length of up to 4 cm in them. Those of trays 7 to 9 looked even more vital, with more grass leaves and slightly longer length (8-10 cm).

In the present application, all percentages are percentages by weight.

### II. PREVENTION OF WATER EVAPORATION

### Preparation of a stock emulsion (Emulsion 2)

### Components

- 50% paraffin having a Congealing Point of 50°C, one fourth of the paraffin being n-paraffin, the remainder three-fourth being iso-paraffin;
- 2.5% emulsifier (POE (8) C₁₆ - C₁₈ Alcohol (CAS # 68439-4; HLB = 10.5. This emulsifier was used through-out all experiments )); and 47,5% water.

### General method used for preparing emulsions

The paraffin was heated to 80°C. The emulsifier was added and the mixture was stirred until homogeneous. Demineralized water was heated to 90°C and then dropwise added to the vigorously stirred paraffin/emulsifier mixture using a magnetic stirrer with magnetic stirring bar until the viscosity dropped significantly (usually when 35-40% of the water had been added) upon which the remaining water was added in one go and stirred for a further minute, giving a stable white emulsion. After cooling down to room temperature, the resulting emulsions were low viscous and could easily be diluted with tap or demineralized water.

The stock emulsion was diluted with water and can be applied with an amount corresponding to 1 litre per square meter of water using a plant spray (as commonly used for spraying pot plants etc. with water).

### Experiment II.1:

Stock emulsions were prepared as disclosed above. All stock emulsions were diluted from stock emulsion to 1% non-volatile matter with tap water. The diluted emulsions (70 g) were poured on a plastic plate (surface area 204 cm²) and these were accurately weighed on an analytical balance. After 4 days under ambient conditions, the plastic plates were again weighed and their weight losses were determined:

| Sample/Emulsion basis | Waterevaporation (%) | Reduction (%) |
|---|---|---|
| Water 100% | 65 ± 7 | --- |
| Paraffin A | 4 ± 0 | 94 |
| Paraffin B | 55 ± 5 | 16 |
| Polyethylene | 74 ± 7 | 0 |
| Ethylene-Vinyl Acetate-Copolymer | 75 ± 5 | 0 |
| Polyethylene wax | 77 ± 1 | 0 |
| Montane ester | 72 ± 0 | 0 |
| Bees wax | 90 ± 0 | 0 |
| Carnaubawax | 86 ± 4 | 0 |
| Polypropylene wax | 80 ± 2 | 0 |

As to the two paraffins in the above table, the first mentioned paraffin A was the paraffin of the stock emulsion, and the second paraffin B was identical except that it comprised only 1/16th of linear n-paraffin instead of 1/4th. This shows that a higher content of linear paraffin is very beneficial for countering evaporation. Data on other materials (available from BYK Cera, Deventer, The Netherlands) Polyethylene (Aquacer 501): Non-ionic emulsion of a polyethylene wax 35% in water (m.p. wax = 130°C); EVA-Copolymer (Aquacer 526): 30%, (m.p. wax = 105°C); Polyethylene wax (Aquacer 531): Non-ionic emulsion of a modified polyethylene wax 45% in water (m.p. wax = 130°C); Montane Ester (Aquacer 541): C₂₀-C₃₀carboxylic Acid Esters 62-68%; 30% (m.p. wax = 80°C); Bees Wax (Aquacer 561): C₄₀ - C₄₆ wax esters; 25% (m.p. wax = 65°C); Carnauba wax (Aquacer 565): C₄₆ - C₆₄ wax esters; 25% (m.p. wax = 85°C); Polypropylene wax (Aquacer 595): Anionic/non-ionic aqueous emulsion of a modified polypropylene wax; 40% (m.p. wax = 140°C).

### Experiment II.2:

Three stock emulsions were used in this experiment.
Emulsion 1: 62% paraffin (congealing Point 50°C; 1/4 being 25% n-paraffin);
2.5% emulsifier;
35.5% water.
Emulsion 2: As described above.
Emulsion 3: 50% paraffin (melting point 60°C, 1/16th being n-paraffine);
2.5% emulgator;
47.5% water.

In several plastic cups (10 x 7 cm; 70 cm²) 100 ± 1 gram of sample was weighed in triplicate for each sample. The total weight of these cups was determined and noted. The cups were placed in the fume cupboard and periodically weighed. After 239 hours the following results were obtained:

| Sample | Waterevaporation (%) | Reduction (%) |
|---|---|---|
| Water 100% | 100 | --- |
| Paraffin Emulsion 1 (0.6%) | 14 | 86 |
| Paraffin Emulsion 1 (0.3%) | 15 | 85 |
| Paraffin Emulsion 2 (0.5%) | 11 | 89 |
| Paraffin Emulsion 2 (0.25%) | 19 | 81 |
| Paraffin Emulsion 3 (0.5%) | 65 | 35 |

## Claims

1. A method of treating an outdoors area, wherein the outdoors area is sprayed with an aqueous solution to promote plant growth, **characterized in that** the outdoors area is sprayed with a colloidal solution, said colloidal solution comprising
- a discontinuous first phase comprising paraffin
- having a carbon chain length between 18 and 40 carbon atoms;
- a solidification point between 15 and 70°C; and
- of which at least 6% by weight is linear; and
- a continuous second phase comprising water;
the colloidal solution being applied in an amount of at least 1.25 g of paraffin per m².

2. The method according to claim 1, wherein the outdoors area is an agricultural field.

3. The method according to claim 2, wherein the agricultural field is sprayed with said colloidal solution on the day that the field is sown.

4. The method according to claim 3, wherein sowing and spraying is performed simultaneously.

5. The method according to claim 2, wherein the agricultural field is sprayed with said colloidal solution within 30 days after at least one operation chosen from ploughing and harrowing.

6. The method according to claim 1, wherein the outdoors area is chosen from a golf course, a soccer field, a hockey field and a football field.

7. The method according to claim 1, wherein the outdoors area is chosen from lawns and parks.

8. The method according to any of the preceding claims, wherein the paraffin is applied in an amount of 1.25 to 25 g/m², preferably between 2.5 and 10 g/m².

9. The method according to any of the preceding claims, wherein at least 10 wt% of the paraffin is linear paraffin.

10. The method according to any of the preceding claims, wherein the second phase comprises a saccharid dissolved and/or dispersed in water, the saccharid being chosen from the group consisting of mono-saccharids, oligo-saccarids and polysaccharids, and the saccharid is applied in an amount of at least 0.1 g/m².

11. The method according to claim 10, wherein the amount of saccharid applied per m² is between 2 and 100 g/m².

12. The method according to any of the preceding claims, wherein the method comprises diluting a concentrated colloidal suspension using water, and spraying the diluted colloidal solution.

## Patentansprüche

1. Ein Verfahren zum Behandeln einer Fläche im Freien, wobei die Fläche im Freien mit einer wässrigen Lösung zur Förderung des Pflanzenwachstums besprüht wird, **dadurch gekennzeichnet, dass** die Fläche im Freien mit einer kolloidalen Lösung besprüht wird, wobei die kolloidale Lösung umfasst:
- eine diskontinuierliche erste Phase, die Paraffin umfasst,
- das eine Kohlenstoffkettenlänge zwischen 18 und 40 Kohlenstoffatomen;
- einen Erstarrungspunkt zwischen 15 und 70° C hat; und
- wovon zumindest 6 Gewichtsprozent linear sind; und
- eine kontinuierliche zweite Phase, die Wasser umfasst;
wobei die kolloidale Lösung in einer Menge von zumindest 1,25 g Paraffin pro m² aufgebracht wird.

2. Das Verfahren nach Anspruch 1, wobei die Fläche im Freien ein landwirtschaftliches Feld ist.

3. Das Verfahren nach Anspruch 2, wobei das landwirtschaftliche Feld mit der kolloidalen Lösung an dem Tag besprüht wird, an dem das Feld eingesät wird.

4. Das Verfahren nach Anspruch 3, wobei das Einsäen und Sprühen gleichzeitig durchgeführt wird.

5. Das Verfahren nach Anspruch 2, wobei das landwirtschaftliche Feld mit der kolloidalen Lösung innerhalb 30 Tagen nach wenigstens einer Operation ausgewählt unter Pflügen und Eggen besprüht wird.

6. Das Verfahren nach Anspruch 1, wobei die Fläche im Freien aus einem Golfplatz, einem Fußballfeld, einem Hockeyfeld und einem Football-Feld ausgewählt wird.

7. Das Verfahren nach Anspruch 1, wobei die Fläche im Freien von Rasenflächen und Parks ausgewählt wird.

8. Das Verfahren nach einem der vorstehenden Ansprüche, wobei das Paraffin in einer Menge von 1,25 bis 25 g/m², bevorzugt zwischen 2,5 und 10 g/m², aufgebracht wird.

9. Das Verfahren nach einem der vorstehenden Ansprüche, wobei wenigstens 10 Gewichtsprozent des Paraffins lineares Paraffin sind.

10. Das Verfahren nach einem der vorstehenden Ansprüche, wobei die zweite Phase ein in Wasser gelöstes und/oder dispergiertes Saccharid umfasst, wobei das Saccharid aus der aus Mono-Sacchariden, Oligo-Sacchariden und Poly-Sacchariden bestehenden Gruppe ausgewählt wird, und das Sacharid in einer Menge von zumindest 0,1 g/m² aufgebracht wird.

11. Das Verfahren nach Anspruch 10, wobei die Menge des pro m² aufgebrachten Saccharids zwischen 10 und 100 g/m² beträgt.

12. Das Verfahren nach einem der vorstehenden Ansprüche, wobei das Verfahren den Schritt des Verdünnens einer konzentrierten kolloidalen Suspension unter Verwendung von Wasser und Aufsprühens der verdünnten kolloidalen Lösung umfasst.

## Revendications

1. Un procédé de traitement d'une zone extérieure, dans lequel la zone extérieure est pulvérisée avec une solution aqueuse pour promouvoir la croissance des plantes,
**caractérisé en ce que** la zone extérieure est pulvérisée avec une solution colloïdale, ladite solution colloïdale comprenant
- une première phase discontinue comprenant de la paraffine
- ayant une longueur de chaîne carbonée de 18 à 40 atomes de carbone;
- ayant un point de solidification compris entre 15 et 70° C ; et
- dont au moins 6% en poids est linéaire; et
- une deuxième phase continue comprenant de l'eau ;
la solution colloïdale étant appliquée en une quantité d'au moins 1,25 g de paraffine par m².

2. Le procédé selon la revendication 1, dans lequel la zone extérieure est un champ agricole.

3. Le procédé selon la revendication 2, dans lequel le champ agricole est pulvérisé avec ladite solution colloïdale le jour où le champ est ensemencé.

4. Le procédé selon la revendication 3, dans lequel l'ensemencement et la pulvérisation sont effectués simultanément.

5. Le procédé selon la revendication 2, dans lequel le champ agricole est pulvérisé avec ladite solution colloïdale dans les 30 jours après au moins une opération choisie parmi le labour et le hersage.

6. Le procédé selon la revendication 1, dans lequel la zone extérieure est choisie parmi un parcours de golf, un terrain de football, un terrain de hockey et un terrain de rugby.

7. Le procédé selon la revendication 1, dans lequel la zone extérieure est choisie parmi les pelouses et les parcs.

8. Le procédé selon l'une quelconque des revendications précédentes, dans lequel la paraffine est appliquée en une quantité allant de 1,25 à 25 g/m², de préférence entre 2,5 et 10 g/m².

9. Le procédé selon l'une quelconque des revendications précédentes, dans lequel au moins 10% en poids de la paraffine est de la paraffine linéaire.

10. Le procédé selon l'une quelconque des revendications précédentes, dans lequel la seconde phase comprend un saccharide dissous et / ou dispersé dans l'eau, le saccharide étant choisi dans le groupe constitué des monosaccharides, des oligosaccharides et des polysaccharides, et le saccharide est appliqué en une quantité d'au moins 0,1 g/m².

11. Le procédé selon la revendication 10, dans lequel la quantité de saccharide appliquée par m² est comprise entre 2 et 100 g/m².

12. Le procédé selon l'une quelconque des revendications précédentes, dans lequel le procédé comprend le fait de diluer une suspension colloïdale concentrée en utilisant de l'eau, et de pulvériser la solution colloïdale diluée.
